# EUROPEAN PATENT APPLICATION

(11) **EP 4 310 146 A1**
(43) Date of publication of application: **24.01.2024**
(21) Application number: 22771256.9
(22) Date of filing: 09.03.2022
(51) Int. Cl.: C08L 77/00, C08K 5/435, C08L 83/06, C08L 83/10, C08L 101/06

(54) **POLYAMIDE RESIN COMPOSITION, AND MOLDED ARTICLE OBTAINED BY MOLDING SAME**

(30) Priority: 16.03.2021 JP 2021042120
(71) Applicant: Toray Industries, Inc., Tokyo 103-8666 (JP)
(72) Inventor: NISHIDA Shingo, Nagoya-shi, Aichi 455-8502 (JP); AKITA Masaru, Nagoya-shi, Aichi 455-8502 (JP)
(74) Representative: Mewburn Ellis LLP
(86) International application number: PCT/JP2022/010429
(87) International publication number: WO 2022/196505

(57) **Abstract**

The present invention pertains to a polyamide resin composition which contains, with respect to 100 parts by mass of a polyamide resin (A), 0.1-100 parts by mass of a thermoplastic resin (B) having a reactive functional group and 0.1-5 parts by mass of an organically modified siloxane compound (C) having a specific structure.

## Description

### TECHNICAL FIELD

The present invention relates to a polyamide resin composition and a molded article obtained by molding the same.

### BACKGROUND ART

A thermoplastic resin, particularly an engineering plastic having excellent mechanical properties and thermal properties, are used in various applications by taking advantage of excellent properties thereof. A polyamide resin, which are one type of engineering plastics, is excellent in balance between mechanical properties and toughness, and therefore is mainly used for injection molding applications, and is used for various applications such as various sports applications, electric and electronic parts, mechanical parts, and automobile parts. Depending on applications, high impact resistance is required in addition to strength and rigidity, and development of a material using a polymer alloy has been actively promoted in the related art (for example, Patent Literatures 1 and 2).

On the other hand, along with compatibility between functionality and a design in sports applications and miniaturization and precision in electric and electronic part applications, a shape of the article is becoming complicated, and along with this, a large number of weld parts occur in a molded article, and there are cases in which properties deteriorate from the weld parts, and especially problems such as cracks occur when the article is used in a cold region.

As a welding characteristic improvement technique, there have been proposed a technique in which a polyamide resin is used as a continuous phase, a rubbery polymer having a specific reactive functional group is used as a dispersed phase, fine particles each having a particle diameter of 1 nm to 100 nm constituted by reaction products of the polyamide resin and the rubbery polymer having the reactive functional group are contained in the dispersed phase, and an area occupied by the fine particles in the dispersed phase is set to 10% or more (Patent Literature 3), and a composition containing a polyamide resin and a halogen based-flame retardant in which an ionomer resin partially neutralized with monovalent cations is contained (Patent Literature 4).

In recent years, a large molding machine has been used for the purpose of mass production of molded articles, but in production of a small molded article using the large molding machine, when a molten resin is retained in the molding machine for a long time, a part of the resin decomposes and generates gas, which causes a problem that strength of the weld part of the molded article is lowered. Regarding this problem, a composition in which a metal behenate is blended with a composition containing a polyamide resin and an inorganic filler (Patent Literature 5) has been proposed.

### CITATION LIST

### PATENT LITERATURE

Patent Literature 1: JP2012-107244A
Patent Literature 2: JP2020-059846A
Patent Literature 3: JP2017-095542A
Patent Literature 4: JP2002-201351A
Patent Literature 5: JP2011-195790A

### SUMMARY OF INVENTION

### TECHNICAL PROBLEM

However, tensile strength, toughness, and bending fatigue resistance of a thin weld part of each of molded articles obtained from polyamide resin compositions of Patent Literatures 1 to 5 are still insufficient. Further, it has long been an object to prevent deterioration in properties of the weld part when the molten resin is retained in the molding machine.

In view of these problems in the related art, an object of the present invention is to provide a polyamide resin composition excellent in melt retention stability, and to provide a molded article excellent in tensile strength, toughness, and bending fatigue resistance of a thin weld part when the molded article is molded using the polyamide resin composition.

### SOLUTION TO PROBLEM

In order to solve the above problems, the present invention mainly has the following configuration.
(1) A polyamide resin composition including:
   a polyamide resin (A); and
   0.1 to 100 parts by mass of a thermoplastic resin (B) having a reactive functional group and 0.1 to 5 parts by mass of an organic-modified siloxane compound (C) having a structure represented by the following formula (1), with respect to 100 parts by mass of the polyamide resin (A).

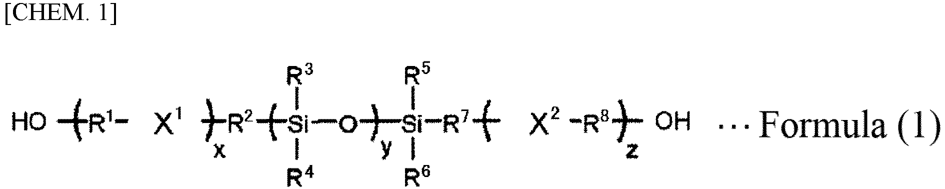

In the formula (1), R¹, R², R⁷, and R⁸ are the same or different from one another and each is a divalent hydrocarbon group; R³, R⁴, R⁵, and R⁶ are the same or different from one another and each is a hydrogen atom, a monovalent hydrocarbon group or a derivative group thereof, an alkoxy group, an aryloxy group, or -NR⁹R¹⁰ (R⁹ and R¹⁰ are the same or different from one another and each is a hydrogen atom, or a monovalent hydrocarbon group or a derivative group thereof); x, y, and z are integers of 1 or more; and X¹ and X² are the same or different from each other, and each is an ester group or a divalent hydrocarbon group.
(2) The polyamide resin composition according to (1), in which X¹ and X² in the formula (1) of the organic-modified siloxane compound (C) are the same or different from each other and each is an ester group or an alkylene group.
(3) The polyamide resin composition according to (1) or (2), in which the reactive functional group of the thermoplastic resin (B) is at least one selected from an acid anhydride group and an epoxy group.
(4) The polyamide resin composition according to any one of (1) to (3), further including 1 to 20 parts by mass of a sulfonamide-based compound (D) with respect to 100 parts by mass of the polyamide resin (A), the sulfonamide-based compound (D) having a structure represented by the following formula (2).

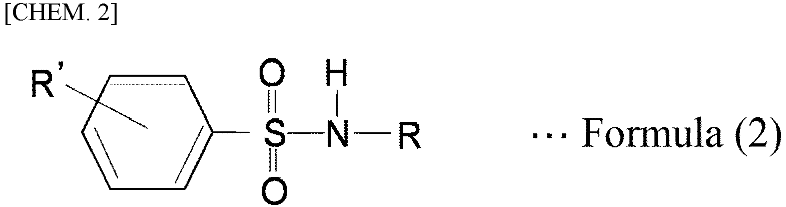

In the formula (2), R and R' are the same or different from each other, and each is an alkyl group having 1 to 5 carbon atoms or a hydroxyalkyl group.
(5) A molded article obtained by molding the polyamide resin composition according to any one of (1) to (4).
(6) The molded article according to (5), including a weld part.

### ADVANTAGEOUS EFFECTS OF INVENTION

The present invention can provide a polyamide resin composition having excellent melt retention stability. Further, it is possible to provide a molded article excellent in tensile strength, toughness, and bending fatigue resistance of a thin weld part when molding is performed using the polyamide resin composition.

### DESCRIPTION OF EMBODIMENTS

Hereinafter, embodiments according to the present invention will be described in detail. A polyamide resin composition according to an embodiment of the present invention essentially contains a polyamide resin (A), a thermoplastic resin (B) having a reactive functional group, and an organic-modified siloxane compound (C) in specific blending amounts. Hereinafter, each component will be described.

### <Polyamide Resin (A)>

The polyamide resin (A) used in the embodiment of the present invention is a polyamide containing (i) an amino acid, (ii) a lactam, or (iii) a diamine and a dicarboxylic acid as main raw materials.

Representative examples of the raw material of the polyamide resin (A) include amino acids such as 6-aminocaproic acid, 11-aminoundecanoic acid, 12-aminododecanoic acid, and p-aminomethylbenzoic acid, lactams such as ε-caprolactam and ω-laurolactam, aliphatic diamines such as tetramethylenediamine, pentamethylenediamine, hexamethylenediamine, 2-methylpentamethylene diamine, nonamethylenediamine, decamethylenediamine, undecamethylenediamine, dodecamethylenediamine, 2,2,4-/2,4,4-trimethylhexamethylenediamine, 5-methylnonamethylenediamine, and 2-methyloctamethylenediamine, aromatic diamines such as meta-xylylenediamine and para-xylylenediamine, alicyclic diamines such as 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethylpiperazine, aliphatic dicarboxylic acids such as adipic acid, suberic acid, azelaic acid, sebacic acid, and dodecane diacid, aromatic dicarboxylic acids such as terephthalic acid, isophthalic acid, 2-chloroterephthalic acid, 2-methylterephthalic acid, 5-methylisophthalic acid, 5-sodium sulfoisophthalic acid, 2,6-naphthalene dicarboxylic acid, hexahydroterephthalic acid, and hexahydroisophthalic acid, and alicyclic dicarboxylic acids such as 1,4-cyclohexanedicarboxylic acid, 1,3-cyclohexanedicarboxylic acid, 1,2-cyclohexanedicarboxylic acid, and 1,3-cyclopentanedicarboxylic acid.

In the embodiment of the present invention, two or more kinds of polyamide homopolymers or polyamide copolymers derived from the raw materials may be blended as the raw materials of the polyamide resin (A).

Specific examples of the polyamide resin (A) include polycaproamide (nylon 6), polyhexamethylene adipamide (nylon 66), polytetramethylene adipamide (nylon 46), polytetramethylene sebacamide (nylon 410), polypentamethylene adipamide (nylon 56), polypentamethylene sebacamide (nylon 510), polyhexamethylene sebacamide (nylon 610), polyhexamethylene dodecamide (nylon 612), polydecamethylene adipamide (nylon 106), polydecamethylene sebacamide (nylon 1010), polydecamethylene dodecamide (nylon 1012), polyundecamide (nylon 11), polydodecanamide (nylon 12), polycaproamide/polyhexamethylene adipamide copolymer (nylon 6/66), polycaproamide/polyhexamethylene terephthalamide copolymer (nylon 6/6T), polyhexamethylene adipamide/polyhexamethylene terephthalamide copolymer (nylon 66/6T), polyhexamethylene adipamide/polyhexamethylene isophthalamide copolymer (nylon 66/6I), polyhexamethylene adipamide/polyhexamethylene isophthalamide/polycaproamide copolymer (nylon 66/6I/6), polyhexamethylene terephthalamide/polyhexamethylene isophthalamide copolymer (nylon 6T/6I), polyhexamethylene terephthalamide/polyundecaneamide copolymer (nylon 6T/11), polyhexamethylene terephthalamide/polydodecanamide copolymer (nylon 6T/12), polyhexamethylene adipamide/polyhexamethylene terephthalamide/polyhexamethylene isophthalamide copolymer (nylon 66/6T/6I), polyxylylene adipamide (nylon XD6), polyxylylene sebacamide (nylon XD10), polyhexamethylene terephthalamide/polypentamethylene terephthalamide copolymer (nylon 6T/5T), polyhexamethylene terephthalamide/poly-2-methylpentamethylene terephthalamide copolymer (nylon 6T/M5T), polypentamethylene terephthalamide/polydecamethylene terephthalamide copolymer (nylon 5T/10T), polynonamethylene terephthalamide (nylon 9T), polydecamethylene terephthalamide (nylon 10T), and polydodecamethylene terephthalamide (nylon 12T). Further, specific examples of the polyamide resin include mixtures and copolymers thereof. Here, "/" indicates a copolymer. The same applies hereinafter.

A particularly preferable polyamide resin is a polyamide resin in which a difference between a melting point and a temperature-falling crystallization temperature is 40°C or more. The polyamide resin in which the difference between the melting point and the temperature-falling crystallization temperature is 40°C or more has a low crystallization speed and thus has excellent welding properties in a weld association portion. The difference between the melting point and the temperature-falling crystallization temperature is preferably 50°C or more. Here, the melting point of the polyamide resin in the embodiment of the present invention is defined as a temperature of an endothermic peak appearing when the polyamide resin is cooled from a molten state to 30°C at a cooling rate of 20°C/min and then heated to the melting point + 40°C at a heating rate of 20°C/min in an inert gas atmosphere using a differential scanning calorimeter. However, when two or more endothermic peaks are detected, a temperature of the endothermic peak having highest peak intensity is defined as the melting point. Further, the temperature-falling crystallization temperature of the polyamide resin in the embodiment of the present invention is defined as a temperature of an exothermic peak appearing when the polyamide resin is cooled from the molten state to 30°C at a cooling rate of 20°C/min in the inert gas atmosphere using the differential scanning calorimeter. However, when two or more exothermic peaks are detected, a temperature of the exothermic peak having the highest peak intensity is set as the temperature-falling crystallization temperature.

Particularly preferable examples of the polyamide resin having a difference between the melting point and the temperature-falling crystallization temperature of 40°C or more include nylon 6, nylon 610, nylon 410, nylon 56, nylon 510, nylon 6/66, nylon 6/6T, nylon 66/6T, nylon 66/6I, nylon 66/6I/6, nylon 6T/11, nylon 6T/12, nylon XD6, nylon XD10, nylon 6T/5T, nylon 6T/M5T, nylon 10T, and nylon 12T, and it is also practically suitable to mix two or more of these according to required properties.

A degree of polymerization of the polyamide resins is not particularly limited, but a relative viscosity (ηr) measured at 25°C in a 98% concentrated sulfuric acidic solution having a resin concentration of 0.01 g/ml is preferably in a range of 1.5 to 5.0. When the relative viscosity is 1.5 or more, tensile strength, toughness, and bending fatigue resistance of the weld part of the obtained molded article can be further improved. The relative viscosity is more preferably 2.0 or more. On the other hand, when the relative viscosity is 5.0 or less, melt flow properties are excellent, and the tensile strength, the tensile toughness, and the bending fatigue resistance of the weld part can be further improved.

### <Thermoplastic Resin (B) Having Reactive Functional Group>

The thermoplastic resin (B) having the reactive functional group in the present invention is a thermoplastic resin having a reactive functional group in a molecular chain. However, the thermoplastic resin (B) is different from the polyamide resin (A).

A thermoplastic resin serving as a base of the thermoplastic resin (B) having the reactive functional group is not particularly limited, and at least one resin selected from a polyester resin, a polyphenylene sulfide resin, a polyphenylene oxide resin, a polycarbonate resin, a polylactic acid resin, a polysulfone resin, a polyacetal resin, a tetrafluoride polyethylene resin, a polyether imide resin, a polyamide imide resin, a polyimide resin, a polyethersulfone resin, a polyether ketone resin, a polythioether ketone resin, a polyether ether ketone resin, a polyethylene resin, a polypropylene resin, a styrene resin such as a polystyrene resin and an ABS resin, a rubbery polymer, and a polyalkylene oxide resin can be used.

Among them, a polyphenylene oxide resin and a rubbery polymer are preferable from the viewpoint of ease of introduction of the reactive functional group, and the rubbery polymer is more preferable from the viewpoint of affinity with the polyamide resin and the tensile strength, the tensile toughness, and the bending fatigue resistance of the weld part.

Specific examples of the polyphenylene oxide resin used in the present invention include poly (2,6-dimethyl-1,4-phenylene oxide), poly(2-methyl-6-ethyl-1,4-phenylene oxide), poly(2,6 -diphenyl-1,4-phenylene oxide), poly(2-methyl-6-phenyl-1,4-phenylene oxide), and poly(2,6-dichloro-1,4-phenylene oxide), and further include copolymers such as copolymers of 2,6-dimethylphenol and other phenols (for example, 2,3,6-trimethylphenol). Among them, poly(2,6-dimethyl-1,4-phenylene oxide) and a copolymer of 2,6-dimethyl phenol and 2,3,6-trimethylphenol are preferable, and poly(2,6-dimethyl-1,4-phenylene oxide) is particularly preferable.

The polyphenylene oxide resin preferably has a reduced viscosity in a range of 0.15 to 0.70 measured at 30°C in a 0.5 g/dl chloroform solution.

A method for producing such a polyphenylene oxide resin is not particularly limited, and a polyphenylene oxide resin obtained by a known method can be used. For example, it can be easily produced by oxidation polymerization using, as a catalyst, a complex of cuprous salt and amine according to US3306874B of Hay.

A rubbery polymer used as the base resin of the thermoplastic resin (B) having the reactive functional group in the present invention generally contains a polymer having a glass transition temperature lower than room temperature, and refers to a polymer in which some of molecules are bound to each other by covalent bonds, ionic bonds, van der Waals forces, entanglement, or the like. Preferred examples thereof include diene rubbers such as polybutadiene, polyisoprene, a random copolymer and a block copolymer of styrene-butadiene, a hydrogenated product of the block copolymer, an acrylonitrile-butadiene copolymer, a butadiene-isoprene copolymer; ethylene-propylene random and block copolymers; ethylene-butene random and block copolymers; a copolymer of ethylene and an α-olefin; ethylene-unsaturated carboxylic acid ester copolymers such as ethylene-acrylic acid ester and ethylene-methacrylic acid ester; acrylic elastic polymers such as acrylate-butadiene copolymers, for example, butylacrylate-butadiene copolymers; copolymers of ethylene and vinyl fatty acids such as ethylene-vinyl acetate; ethylene-propylene non-conjugated diene terpolymers such as ethylene-propylene-ethylidene-norbomene copolymers and ethylene-propylene-hexadiene copolymers; and thermoplastic elastomers such as butylene-isoprene copolymers, chlorinated polyethylene, polyamide elastomers, and polyester elastomers.

Among them, a copolymer of ethylene and an α-olefin and ethylene-unsaturated carboxylic acid ester copolymers are preferably used from the viewpoint of compatibility with the polyamide resin (A). Most preferred is the copolymer of ethylene and the α-olefin.

The copolymer of ethylene and the α-olefin generally contains a polymer having a glass transition temperature lower than room temperature, and refers to a copolymer of an ethylene monomer and an α-olefin polymer in which some of molecules are bound to each other by covalent bonds, ionic bonds, van der Waals forces, entanglement, or the like. Examples of the α-olefin polymer include diene rubbers such as polybutadiene, polyisoprene, a random copolymer and a block copolymer of styrene-butadiene, a hydrogenated product of the block copolymer, an acrylonitrile-butadiene copolymer, a butadiene-isoprene copolymer, ethylene, propylene, 1-butene, 1-pentene, and 1-octene. Among these copolymers of ethylene and α-olefin, an ethylene-propylene copolymer, an ethylene-1-butene copolymer, an ethylene-1-octene copolymer, and a propylene-1-butene copolymer are preferable, and an ethylene-1-butene copolymer and an ethylene-1-octene copolymer are particularly preferable, from the viewpoint of the tensile strength, the tensile toughness, and the bending fatigue resistance of the weld part of the molded article obtained by molding the polyamide resin composition.

An unsaturated carboxylic acid ester in the ethylene-unsaturated carboxylic acid ester copolymers is preferably a (meth)acrylic acid ester, and preferably an ester of (meth)acrylic acid and an alcohol. Specific examples of the unsaturated carboxylic acid ester include (meth)acrylic acid esters such as methyl (meth)acrylate, ethyl (meth)acrylate, 2-ethylhexyl (meth)acrylate and stearyl (meth)acrylate. A mass ratio of an ethylene component to an unsaturated carboxylic acid ester component in the copolymer is not particularly limited, and is preferably in a range of 90/10 to 10/90, and more preferably in a range of 85/15 to 15/85.

The reactive functional group in the thermoplastic resin (B) having the reactive functional group is not particularly limited as long as the reactive functional group reacts with a functional group present in the polyamide resin (A) and the organic-modified siloxane compound (C) to be described later. Examples thereof include at least one selected from an amino group, a carboxyl group, a carboxyl metal salt, a hydroxyl group, an epoxy group, an acid anhydride group, an isocyanate group, a mercapto group, an oxazoline group, and a sulfonic acid group. Among them, an acid anhydride group and an epoxy group are preferably used because the acid anhydride group and the epoxy group have high reactivity and few side reactions such as decomposition and crosslinking. Most preferred is the acid anhydride group.

Examples of an acid anhydride in the acid anhydride group include maleic anhydride, itaconic anhydride, endic anhydride, citraconic anhydride, and 1-butene-3,4 - dicarboxylic anhydride. Two or more kinds thereof may be used in combination at the same time. Among these, maleic anhydride and itaconic anhydride are preferably used.

When the acid anhydride group is introduced into the base resin of the thermoplastic resin (B), a method thereof can be carried out by a commonly known technique, and is not particularly limited. For example, a method of copolymerizing the acid anhydride and a monomer that is a raw material of the rubbery polymer, a method of grafting the acid anhydride onto the rubbery polymer, and the like can be used.

When the epoxy group is introduced into the base resin of the thermoplastic resin (B), a method thereof can be carried out by a generally known technique, and is not particularly limited. For example, a method of copolymerizing a vinyl-based monomer having the epoxy group with the monomer that is the raw material of the rubbery polymer, a method of polymerizing the rubbery polymer using a polymerization initiator or a chain transfer agent which has the functional group, a method of grafting an epoxy compound onto the rubbery polymer, and the like can be used.

Examples of the vinyl-based monomer having the epoxy group include glycidyl ester compounds of α,β-unsaturated acids such as glycidyl acrylate, glycidyl methacrylate, glycidyl ethacrylate and glycidyl itaconate.

When a carboxyl group is introduced into the base resin of the thermoplastic resin (B), a method thereof can be carried out by a commonly known technique, and is not particularly limited. For example, a method of copolymerizing an unsaturated carboxylic acid-based monomer having the carboxyl group with a monomer that is a raw material of the base resin of (B) can be used. Specific examples of the unsaturated carboxylic acid include (meth)acrylic acid. Examples of the resin (B) having the reactive functional group include ethylene-unsaturated carboxylic acid copolymers such as ethylene-ethylene acrylic acid-methacrylic acid.

The number of functional groups per molecular chain in the thermoplastic resin (B) having the reactive functional group is not particularly limited, and is usually preferably 1 to 10, and is preferably 1 to 5 in order to reduce side reactions such as crosslinking.

In the polyamide resin composition according to the present invention, a content of the thermoplastic resin (B) having the reactive functional group is 0.1 to 100 parts by mass with respect to 100 parts by mass of the polyamide resin (A). When the content of the thermoplastic resin (B) having the reactive functional group is less than 0.1 parts by mass, an amount of reaction with the polyamide resin (A) cannot be ensured, and the tensile strength, the toughness, and the bending fatigue resistance of the weld part of the molded article may be reduced. The content of the thermoplastic resin (B) having the reactive functional group is preferably 5 parts by mass or more, and more preferably 20 parts by mass or more with respect to 100 parts by mass of the polyamide resin (A). On the other hand, when the content of the thermoplastic resin (B) having the reactive functional group is more than 100 parts by mass, since the melt flow properties of the polyamide resin composition (A) is lowered and an association rate of the weld part is lowered, the tensile strength, the toughness and the bending fatigue resistance of the weld part of the obtained molded article may be lowered. Further, since dispersibility of the thermoplastic resin (B) in the polyamide resin composition decreases, the tensile strength, the toughness, and the bending fatigue resistance of the weld part decrease. Further, plasticization and decomposition are accelerated when the polyamide resin composition is retained in a molding machine, and a large amount of gas is generated, which may reduce the tensile strength, the toughness, and the bending fatigue resistance of the weld part of the obtained molded article. The content of the thermoplastic resin (B) having the reactive functional group is preferably 60 parts by mass or less, more preferably 40 parts by mass or less, and still more preferably 30 parts by mass or less with respect to 100 parts by mass of the polyamide resin (A).

In the polyamide resin composition according to the present invention, it is preferable that the polyamide resin (A) forms a continuous phase (α), and the thermoplastic resin (B) having the reactive functional group forms a dispersed phase (β), and that the dispersed phase (β) contains fine particles having a particle diameter of 1 nm to 100 nm, which are constituted by compounds produced by the reaction of the polyamide resin (A) and the thermoplastic resin (B) having the reactive functional group, in electron microscopic observation of the molded article obtained from the resin composition. By highly controlling a structure in the dispersed phase as described above, the tensile strength, the toughness, and the bending fatigue resistance of the weld part are further improved. Further, it is possible to prevent plasticization and thermal decomposition during melt retention, and it is possible to further prevent the decrease in the tensile toughness and bending fatigue resistance of the weld part after the retention in the molding machine.

When the dispersion layer (β) contains the fine particles constituted by the compounds generated by the reaction of the polyamide resin (A) and the thermoplastic resin (B), since layer-deformation of the dispersion layer (β) can be prevented when the molded article is injection molded or when an external force is applied to the molded article, the tensile strength, the toughness and the bending fatigue resistance of the weld part are further improved. Further, it is possible to prevent plasticization and thermal decomposition during melt retention, and it is possible to further prevent the decrease in the tensile toughness and bending fatigue resistance of the weld part after the retention in the molding machine.

Here, although a known technique can be applied to morphological observation using an electron microscope, but under general molding conditions, morphology does not change before and after the molding, and thus in the present invention, a central portion in a cross-sectional direction of an ISO test piece obtained by injection molding the polyamide resin composition is cut into 1 mm to 2 mm square, the thermoplastic resin having the reactive functional group is dyed with ruthenium tetroxide, an ultra-thin slice of 0.1 µm or less (approximately 80 nm) is cut with an ultramicrotome at -16°C and observed with a transmission electron microscope at a magnification of 35,000 times.

In order to obtain the polyamide resin composition having the morphology, that is, containing specific fine particles in the dispersion layer (β), it is preferable to contain the organic-modified siloxane compound (C) to be described below.

### <Organic-modified Siloxane Compound (C)>

The polyamide resin composition according to the present invention further contains the organic-modified siloxane compound (C). However, the organic-modified siloxane compound (C) is different from both the polyamide resin (A) and the thermoplastic resin (B) having the reactive functional group.

In the related art, it is known that when the organic-modified siloxane compound is incorporated into the polyamide resin, a surface of the polyamide resin molded article can be modified, and it is known that the organic-modified siloxane compound is used as a releasability-imparting agent during the molding and as a hydrophobicity-imparting agent for the surface of the molded article. However, since the siloxane compound has a low surface free energy and tend to migrate to a resin surface, it has been extremely difficult to form a dispersed structure in the resin. Further, even the organic-modified siloxane compound into which a site compatible with the resin has been introduced is not sufficient to control surface migration thereof.

In the polyamide resin composition according to the present invention, it is found that by containing the organic-modified siloxane compound (C) having a specific structure to be described later together with the thermoplastic resin (B) having a reactive functional group having a specific structure, the organic-modified siloxane compound functions as a compatibilizer between the polyamide resin (A) and the thermoplastic resin (B), thereby further improving the dispersibility of the thermoplastic resin (B) in the polyamide resin composition. Although a mechanism of the action is not clear, since the organic-modified siloxane compound (C) in the present invention can react with both the polyamide resin (A) and the thermoplastic resin (B), it is considered that compatibility between the polyamide resin (A) and the thermoplastic resin (B) is further improved. In particular, it is considered that a stable dispersed structure can be formed even at the weld association portion where the dispersed structure tends to be unstable, and the tensile strength, the toughness and the bending fatigue resistance of the weld part are improved. Further, it is found that since it is also effective for maintaining a dispersion state of the thermoplastic resin (B) in the polyamide resin composition during the retention, even when the molten resin is retained in the molding machine for a long period of time, it is possible to prevent the decrease in the tensile strength, the toughness, and the bending fatigue resistance of the weld part.

The organic-modified siloxane compound (C) according to the present invention preferably has the following repeating unit (I).

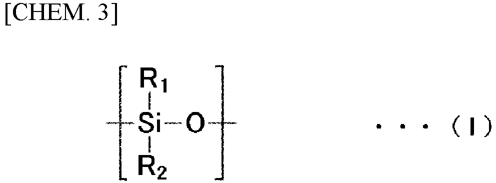

In the general formula (I), R¹ and R² are the same or different from each other and each is a hydrogen atom, a monovalent hydrocarbon group or a derivative group thereof, an alkoxy group, an aryloxy group, or -NR³R⁴ (R³ and R⁴ are the same or different form each other and each is a hydrogen atom, a monovalent hydrocarbon group, or a derivative group thereof).

The monovalent hydrocarbon group in R¹, R², R³, and R⁴ is preferably an alkyl group having 1 to 20 carbon atoms, an alkenyl group having 2 to 20 carbon atoms, an alkynyl group having 2 to 20 carbon atoms, a cycloalkyl group having 3 to 30 carbon atoms, a cycloalkenyl group having 3 to 30 carbon atoms, a cycloalkynyl group having 3 to 30 carbon atoms, or an aryl group having 6 to 30 carbon atoms, more preferably an alkyl group having 1 to 3 carbon atoms, and particularly preferably a methyl group.

The organic-modified siloxane compound (C) is a mixture of a siloxane having the structure of the general formula (I) and a thermoplastic resin (hereinafter, referred to as a polymer P) and/or a chemically bonded compound thereof. In this case, from the viewpoint of compatibility between the polyamide resin (A) and the thermoplastic resin (B) having the reactive functional group, the compound in which the siloxane having the structure of the general formula (I) and the polymer P are chemically bonded is preferable.

A melting point of the polymer P is preferably equal to or lower than a melting point of the polyamide resin (A) from the viewpoint of a processing temperature during melt-kneading. Further, the siloxane having the structure of the general formula (I) is preferably bonded to a molecular chain of the polymer P through a block bond.

The organic-modified siloxane compound (C) in the present invention preferably has a structure represented by the following general formula (1).

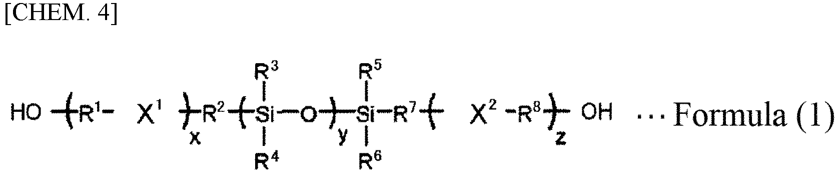

In the formula (1), R¹, R², R⁷, and R⁸ are the same or different from one another and each is a divalent hydrocarbon group; R³, R⁴, R⁵, and R⁶ are the same or different from one another and each is a hydrogen atom, a monovalent hydrocarbon group or a derivative group thereof, an alkoxy group, an aryloxy group, or -NR⁹R¹⁰ (R⁹ and R¹⁰ are the same or different from one another and each is a hydrogen atom, or a monovalent hydrocarbon group or an derivative group thereof); and x, y, and z are integers of 1 or more. Further, X¹ and X² are the same or different from each other, and each is an ester group or a divalent hydrocarbon group.

The divalent hydrocarbon group in X¹ or X² is preferably an alkylene group, and particularly preferably an alkylene group having 1 carbon atom, that is, a methylene group.

Furthermore, from the viewpoint of being capable of reacting with both the polyamide resin (A) and the thermoplastic resin (B) having the reactive functional group of the specific structure, X¹ and X² are more preferably ester groups.

In the organic-modified siloxane compound (C), X¹ and X² in the general formula (1) are most preferably the ester groups. That is, the organic-modified siloxane compound (C) is preferably a siloxane structure-containing polyester resin represented by the following general formula (3), and is not particularly limited as long as the polyester resin contains a siloxane structure, and may be either an aliphatic polyester or an aromatic polyester. In the present invention, the organic-modified siloxane compound (C) is preferably a block copolymer of polyester and polysiloxane represented by the following general formula (3).

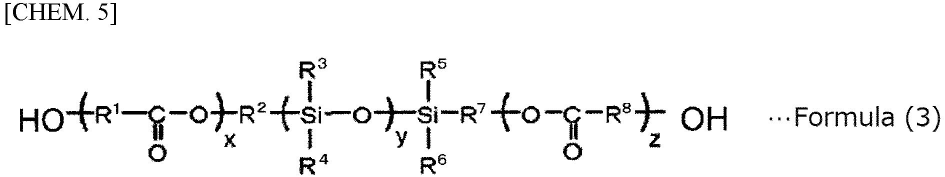

In the formula (3), R¹, R², R⁷, and R⁸ are the same or different from one another and each is a divalent hydrocarbon group; R³, R⁴, R⁵, and R⁶ are the same or different from one another and each is a hydrogen atom, a monovalent hydrocarbon group or a derivative group thereof, an alkoxy group, an aryloxy group, or -NR⁹R¹⁰ (R⁹ and R¹⁰ are the same or different from one another and each is a hydrogen atom, or a monovalent hydrocarbon group or an derivative group thereof); and x, y, and z are integers of 1 or more.

In the general formula (3), R¹, R², R⁷, and R⁸ are the same or different from one another and each is a divalent hydrocarbon group, preferably an alkylene group having 1 to 10 carbon atoms, or an arylene group having 6 to 20 carbon atoms, and more preferably an alkylene group having 1 to 5 carbon atoms.

In the general formula (3), R³, R⁴, R⁵, and R⁶ are the same or different from one another and each is a hydrogen atom, a monovalent hydrocarbon group or a derivative group thereof, an alkoxy group, an aryloxy group, or -NR⁹R¹⁰ (R⁹ and R¹⁰ are the same or different from one another and each is a hydrogen atom, or a monovalent hydrocarbon group or a derivative group thereof).

The monovalent hydrocarbon group is preferably an alkyl group having 1 to 20 carbon atoms, an alkenyl group having 2 to 20 carbon atoms, an alkynyl group having 2 to 20 carbon atoms, a cycloalkyl group having 3 to 30 carbon atoms, a cycloalkenyl group having 3 to 30 carbon atoms, a cycloalkynyl group having 3 to 30 carbon atoms, or an aryl group having 6 to 30 carbon atoms, more preferably an alkyl group having 1 to 3 carbon atoms, and particularly preferably a methyl group.

The "derivative group" means a group in which at least one of a plurality of hydrogen atoms bonded to a carbon atom in a hydrocarbon group or the like is substituted with another atom or functional group.

In the general formula (3), x, y, and z are an integer of 1 or more, x is preferably an integer of 5 to 30, y is preferably an integer of 5 to 50, and z is preferably an integer of 5 to 30.

A number average molecular weight of the siloxane structure-containing polyester resin is preferably 5,000 to 10,000 in terms of melt-kneading properties between the polyamide resin (A) and the thermoplastic resin (B) having the reactive functional group.

In the polyamide resin composition according to the present invention, a content of the organic-modified siloxane compound (C) is 0.1 to 5 parts by mass with respect to 100 parts by mass of the polyamide resin (A).

When the content of the organic-modified siloxane compound (C) is less than 0.1 parts by mass, an amount of reaction between the polyamide resin (A) and the thermoplastic resin (B) having the reactive functional group cannot be sufficiently ensured, the compatibility between the polyamide resin (A) and the thermoplastic resin (B) is not sufficiently increased, and the tensile strength, the toughness, and the bending fatigue resistance of the weld part may be deteriorated. Further, since dispersion stability at the time of the retention in the molding is reduced, the tensile strength, the toughness, and the bending fatigue resistance of the weld part after the retention may also be reduced. The content of the organic-modified siloxane compound (C) is preferably 0.3 parts by mass or more, more preferably 0.8 parts by mass or more with respect to 100 parts by mass of the polyamide resin (A).

On the other hand, when a blending amount of the organic-modified siloxane compound (C) is more than 5 parts by mass, dispersibility of the organic-modified siloxane compound (C) in the polyamide resin composition is reduced, and thus bleeding out to a surface layer of the molded article is likely to occur, and a surface appearance may be reduced. Further, plasticization and decomposition of the polyamide resin composition are promoted, and the tensile strength, the toughness, and the bending fatigue resistance of the weld part may decrease. When a large amount of gas is generated during the retention, the tensile strength, the toughness, and the bending fatigue resistance of the weld part may decrease. The blending amount of the organic-modified siloxane compound (C) is preferably 4 parts by mass or less, and more preferably 2 parts by mass or less with respect to 100 parts by mass of the polyamide resin (A).

A mass ratio ((B)/(C)) of the thermoplastic resin (B) having the reactive functional group to the organic-modified siloxane compound (C) is preferably 0.01 to 500. By setting the mass ratio to 0.01 or more, the tensile strength, the toughness, and the bending fatigue resistance of the weld part of the polyamide resin composition can be further improved. Further, the mass ratio is more preferably 10 or more. On the other hand, when the mass ratio is 500 or less, the plasticization and the decomposition of the polyamide resin composition during the melt retention can be prevented, and the tensile strength, the toughness, and the bending fatigue resistance of the weld part can be further improved. The mass ratio is more preferably 60 or less.

### <Sulfonamide-based Compound (D)>

The polyamide resin composition according to the present invention preferably further contains a sulfonamide-based compound (D) represented by the following general formula (2).

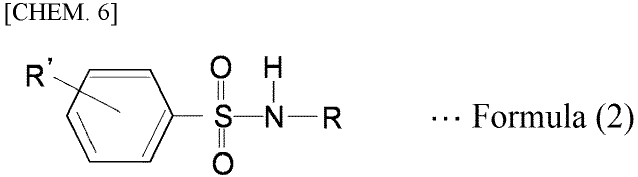

In the formula (2), R and R' may be the same or different from each other, and each is an alkyl group having 1 to 5 carbon atoms or a hydroxyalkyl group.

The sulfonamide-based compound (D) is known in the related art for a role of softening an amorphous portion of the polyamide resin (A), that is, as a plasticizer. On the other hand, it is found that when the polyamide resin composition according to the present invention containing the polyamide resin (A), the thermoplastic resin (B) having the reactive functional group having the specific structure, and the organic-modified siloxane compound (C) having the specific structure further contains the sulfonamide-based compound (D), the tensile toughness and the bending fatigue resistance of the weld part are further improved. Further, it is found that even when the molten resin is retained in the molding machine for a long period of time, it is possible to further prevent a decrease in tensile toughness and bending fatigue resistance of the thin weld part. Although a mechanism of the action is presumption, one reason for this is thought to be that interfacial flexibility in a polymer alloy of the polyamide resin (A) and the thermoplastic resin (B) having the reactive functional group via the organic-modified siloxane compound (C) is further improved.

Examples of the sulfonamide-based compound (D) applicable to the polyamide resin composition according to the present invention include sulfonamides including N-alkylbenzene sulfonamide and toluenesulfonamide. Preferable examples thereof include N-butylbenzenesulfonamide, N-(2-hydroxypropyl)benzenesulfonamide, N-ethyl-o-toluenesulfonamide, N-ethyl-p-toluenesulfonamide, o-toluenesulfonamide, and p-toluenesulfonamide. Most preferably, N-butylbenzenesulfonamide is used.

The polyamide resin composition according to the present invention preferably contains 1 to 20 parts by mass of the sulfonamide-based compound (D) with respect to 100 parts by mass of the polyamide resin (A). When the content of the sulfonamide-based compound (D) used in the present invention is 1 part by mass or more, the interfacial flexibility of in the polymer alloy between the polyamide resin (A) and the thermoplastic resin (B) having the reactive functional group via the organic-modified siloxane compound (C) is improved, and the tensile toughness and the bending fatigue resistance of the weld part are further improved. On the other hand, by setting the content of the sulfonamide-based compound (D) used in the present invention to 20 parts by mass or less, it is possible to prevent the plasticization and the thermal decomposition during the melt retention, and it is possible to further prevent the decrease in tensile toughness and bending fatigue resistance of the weld part after the retention in the molding machine. The content of the sulfonamide-based compound (D) is preferably 8 parts by mass or more, and more preferably 15 parts by mass or less.

### <Optional Additives>

The polyamide resin composition according to the present invention may further contain normal additives in the related art selected from known antioxidants, heat stabilizers, light resistant agents (for example, hindered phenols, hydroquinones, phosphites and substitution products thereof, metal halides, and hindered amines), ultraviolet absorbers (for example, cyanoacrylate-based, benzotriazole-based, benzophenone-based, triazine-based, resorcinol-based, and salicylate-based ultraviolet absorbers), anti-coloring agents (for example phosphite and hypophosphite), flame retardants (for example, melamine cyanurate, hydroxides such as magnesium hydroxide and aluminum hydroxide, aluminum diethylphosphinate, ammonium polyphosphate, brominated polystyrene, brominated polyphenylene oxide, brominated polycarbonate, brominated epoxy resins or combinations of these brominated flame retardants with antimony trioxide), lubricants and release agents (for example, montanic acid esters, stearyl alcohol, stearylamide, and a polyethylene wax), dyes (for example, azo-based, anthraquinone-based, perylene-based, and quinoline-based dyes) or pigments (azo-based, anthraquinone-based, phthalocyanine-based, quinacridone-based, perylene-based, zinc-based, ultramarine-based, and titanium oxide-based pigments, and carbon black), crystal nucleating agents (for example, inorganic nucleating agents such as talc, wollastonite, calcite, aragonite, dolomite, kaolin, and mica, and organic nucleating agents such as metal salts of aromatic carboxylic acids, sorbitol-based derivatives, organic phosphates, and aromatic amide compounds), and antistatic agents (for example, an alkyl sulfate type anionic antistatic agent, a quaternary ammonium salt type cationic antistatic agent, a nonionic antistatic agent such as polyoxyethylene sorbitan monostearate, and a betaine-based antistatic agent), as long as these additives do not impair effects of the present invention. Alternatively, a polymer other than the polyamide resin may be blended to further impart predetermined characteristics.

Two or more kinds of various additives such as antioxidants, heat stabilizers, light resistant agents, ultraviolet absorbers, anti-coloring agents, flame retardant agents, dyes, pigments, crystal nucleating agents, and antistatic agents can be used in combination. A content thereof is not particularly limited, but is preferably 0.01 parts by mass or more and less than 5 parts by mass with respect to 100 parts by mass of the polyamide resin (A).

### <Molding Method and Molded Article>

The polyamide resin composition according to the present invention can be molded by any method. Examples of a molding method include extrusion molding, injection molding, hollow molding, calendering, compression molding, vacuum molding, foam molding, blow molding, and rotational molding. Examples of the molded shape include a plate shape, a fiber shape, an uneven shape, a strand shape, a film shape, a sheet shape, a pipe shape, a hollow shape, a box shape, and a claw shape.

The obtained molded article can be applied to various applications such as electric and electronic parts, automobile parts, vehicle associated parts, building material associated parts, general and industrial machine parts, sports goods, miscellaneous parts, household and office goods, and furniture parts. Among them, they are suitably used for thin molded articles such as net-shaped molded articles, grid-shaped molded articles, sheets, buttons, and electronic device cover parts. More specifically, the molded article is suitably used for a molded article having a thickness of 1 mm or less. A thickness of the molded article in the present invention refers to a thickness of a thickest portion of the molded article. When the molded article includes a rib portion, a hinge portion, a boss portion, and the like, these portions are excluded. Further, the molded article according to the present invention preferably includes the weld part. The molded article obtained from the polyamide resin composition according to the present invention is excellent in tensile strength, toughness, and bending fatigue resistance of the weld part.

Examples of the net and grid-shaped molded articles include those having a grid shape, and specific examples thereof include a net, a curtain, a colander, a draining basket, a triangular sink tidy, a resin mesh, and a mesh filter. Specific examples of the button include a snap button and a dry battery packing. The electronic device cover parts refer to housings of all electronic devices, and examples thereof include housing portions of televisions, personal computers, smart phones, mobile phones, and the like.

### Examples

The present invention will be described in more detail below with reference to examples, but the present invention is not limited only to the following examples. Properties are evaluated according to the following method.

### [Melting Point and Crystallization Speed of Polyamide Resin]

Using a robot (DSC RDC220) manufactured by Seiko Instruments Inc., about 5 mg of a sample was collected and measured under the following conditions in a nitrogen atmosphere. After a temperature was increased to the melting point + 40°C to make the sample in a molten state, a temperature (temperature-falling crystallization temperature: Tc) of an exothermic peak top observed when the temperature was decreased to 30°C at a cooling rate of 20°C/min was obtained. Subsequently, after holding at 30°C for 3 minutes, a temperature (melting point: Tm) of an endothermic peak observed when the temperature was increased to the melting point + 40°C at a heating rate of 20°C/min was obtained. A difference between the melting point and the crystallization speed was used as an index of the crystallization speed.

### [Relative Viscosity of Polyamide Resin]

A relative viscosity (ηr) in 98% concentrated sulfuric acid having a polyamide resin concentration of 0.01 g/ml was measured at 25°C using an Ostwald viscometer.

### <Welding Characteristics before Retention Test>

### [Tensile Strength and Toughness of Weld Part]

Resin composition pellets obtained in each of Examples and Comparative Examples were vacuum dried at 80°C, and were supplied to an injection molding machine "FANUCROBOSHOTα-30i" (manufactured by Fanuc Corporation) to mold a molded article including a weld part according to JIS No. 2 under molding conditions of a cylinder temperature: melting point + 20°C, a mold temperature: 80°C, an injection speed: 100 mm/sec, pressure holding: 20 MPa, and a cooling time: 15 seconds. Next, soaking was performed at 0°C for 2 hours or more in UTA-2.5T manufactured by Orientec Co., Ltd, which is equipped with a thermostatic chamber. A test piece after the soaking was subjected to a tensile test at a sample reference point distance of 64 mm and a tensile speed of 100 mm/min, and tensile strength and tensile break elongation of the weld part were measured. Five test pieces were measured, and a number average value thereof was calculated.

### [Bending Fatigue Resistance of Weld Part]

Resin composition pellets obtained in each of Examples and Comparative Examples were vacuum dried at 80°C, and were supplied to an injection molding machine "FANUCROBOSHOTα-30i" (manufactured by Fanuc Corporation) to mold a molded article including a weld part according to JIS No. 2 under molding conditions of a cylinder temperature: melting point + 20°C, a mold temperature: 80°C, an injection speed: 100 mm/sec, pressure holding: 20 MPa, and a cooling time: 15 seconds. Subsequently, the test piece was subjected to the soaking for 2 hours or more in an atmosphere of 0°C using a De Mattia bending fatigue tester (manufactured by Yasuda Seiki Seisakusho, Ltd.) equipped with a thermostatic chamber. Next, the test piece was stroked at a cycle of 5 Hz (300 times/min) at a distance between chucks of 64 mm to 16 mm, and the number of times of bending until the test piece broke was measured. The greater the number of times of bending until breakage, the better the bending fatigue resistance.

### <Welding Characteristics after Retention Test>

A molded article including a weld part according to JIS No. 2 was injection-molded in the same manner as described above except that a cooling time was 30 minutes. The tensile strength, the toughness, and the bending fatigue resistance of the weld part were evaluated in the same manner as described above with respect to the test piece of the obtained weld part.

The polyamide resin (A), the thermoplastic resin (B) having the reactive functional group, the organic-modified siloxane compound (C), and the sulfonamide-based compound (D) used in Examples and Comparative Examples are as follows.

### Polyamide resin (A)

(A-1): Nylon 610 resin ("Amilan" (registered trademark) CM 2001 manufactured by Toray Industries Inc.), melting point (Tm): 225°C, crystallization temperature (Tc): 165°C, Tm - Tc: 60°C
(A-2): Nylon 6 resin ("Amilan" (registered trademark) CM 1010 manufactured by Toray Industries Inc.), melting point (Tm): 225°C, crystallization temperature (Tc): 170°C, Tm - Tc: 55°C
(A-3): Nylon 66 resin ("Amilan" (registered trademark) CM 3001-N manufactured by Toray Industries Inc.), melting point (Tm): 260°C, crystallization temperature (Tc): 225°C, Tm - Tc: 35°C

### Thermoplastic Resin (B) Having Reactive Functional Group

(B-1): Maleic anhydride-modified ethylene-1-butene copolymer "Tafmer" (registered trademark) MH 7020" (manufactured by Mitsui Chemicals, Inc.)
(B-2): Acrylic modified polypropylene: "Polybond" (registered trademark) 1002" (manufactured by Shiraishi Calcium Kaisha, Ltd.)
(B-3): Glycidyl methacrylate-modified polyethylene copolymer "BONDFAST" (registered trademark) BF-7M (manufactured by SUMITOMO CHEMICAL COMPANY, LIMITED).
(B-4): Maleic anhydride modified polyphenylene oxide resin obtained by dryblending 100 parts by mass of a polyphenylene oxide resin "Iupiace" (registered trademark) PX-100F" (manufactured by Mitsubishi Engineering-Plastics Corporation), 1.2 parts by mass of maleic anhydride, and 0.1 part by mass of a radical precursor (Perhexyne 25B: manufactured by NOF CORPORATION), and melt-kneading the obtained product at a cylinder temperature of 320°C

### Organic-modified Siloxane Compound (C)

(C-1): "TEGOMER" (registered trademark) H-Si6441P" (manufactured by Evonik Industries), a block copolymer of an organic-modified siloxane and a polyester, X¹ and X²: ester group
(C-2): "TEGOMER" (registered trademark) H-Si2311" (manufactured by Evonik Industries), a block copolymer of organic-modified siloxane and polyethylene, X¹ and X²: alkylene group

### Sulfonamide-based compound (D)

(D-1): N-butylbenzenesulfonamide (manufactured by Kanto Chemical Co., Inc.)
(D-2): p-Toluenesulfonamide (manufactured by Kanto Chemical Co., Inc.)

### Other Additives (E)

(E-1): "TEGOMER" (registered trademark) anti-scratch L" (manufactured by Evonik Industries), a block copolymer of an organic-modified siloxane and polyethylene, and no hydroxyl group
(E-2): "BY27-202H" (manufactured by Dow Corning Toray Co., Ltd.), a graft polymer in which an organosiloxane polymer is grafted to LDPE
(E-3): Sodium behenate (manufactured by Nitto Chemical Industry Co., Ltd.)

### (Examples 1 to 19 and Comparative Examples 1 to 10)

The polyamide resin (A), the thermoplastic resin (B) having the reactive functional group, the organic-modified siloxane compound (C), the sulfonamide-based compound (D), and the other additive (E) were mixed in a blending composition shown in Tables 1 to 4, supplied from a main feeder to a twin-screw extruder, and subjected to the melt kneading at a melting point of the polyamide resin (A) + 20°C, a screw rotation speed of 300 rpm, and an extrusion amount of 200 kg/h using a co-rotating, fully intermeshing twin-screw extruder (TEX-65αII, manufactured by Japan Steel Works, Ltd.) having two double-threaded screws and having a screw diameter of 65 mm and L/D = 45 while nitrogen flow was performed, and a molten resin was discharged as a strand from a discharge port (LID = 45).

As for a screw configuration, kneading zones were formed by connecting general kneading discs from positions of L/D = 13, 23 and 31 for LID = 5.0. Furthermore, a reverse screw zone with L/D = 0.5 was provided downstream of the kneading zone. A ratio (%) of a total length of the kneading zones to a total length of the screw was 33% when calculated by (total length of kneading zones)/(total length of screw) x 100. A vent vacuum zone was provided at a position of LID = 38, and volatile components were removed at a gauge pressure of -0.1 MPa. An extruded resin was drawn into a strand, passed through a cooling bath to be cooled, and cut while being taken up by a pelletizer to obtain pellets of a polyamide resin composition.

### (Comparative Example 11)

The polyamide resin (A), and the thermoplastic resin (B) having the reactive functional group were mixed in a blending composition shown in Table 4, supplied from a main feeder to a twin-screw extruder, and subjected to the melt kneading at the melting point of the polyamide resin (A) + 20°C, a screw rotation speed of 300 rpm, and an extrusion capacity of 200 kg/h using a co-rotating, fully intermeshing twin-screw extruder (TEX-65αII, manufactured by Japan Steel Works, Ltd.) including two double-threaded screws and having a screw diameter of 65 mm and L/D = 45 while nitrogen flow was performed, and a molten resin was discharged as a strand from a discharge port (LID = 45). In a screw configuration, from a position of L/D = 13, zones (elongational flow zones) in which melt-kneading was performed while elongational flow was performed was formed by connecting, for Lk/D = 5.0, twist kneading discs in each of which a spiral angle θ which is an angle between an apex on a tip side of the kneading disc and an apex on a rear surface side thereof is 20° in an anti-rotation direction of the screw. Further, a reverse screw zone with L/D = 0.5 was provided downstream of an elongational flow zone. A ratio (%) of a total length of the elongational flow zones to a total length of the screw was 11% when calculated by (total length of elongational flow zones)/(total length of screw) x 100. A vent vacuum zone was provided at a position of LID = 38, and volatile components were removed at a gauge pressure of -0.1 MPa. An extruded resin was drawn into a strand, passed through a cooling bath to be cooled, and cut while being taken up by a pelletizer to obtain pellets of a polyamide resin composition.

### Evaluation results of Examples and Comparative Examples are shown in Tables 1 to 4.

**Table 1**

| | | | Ex. 1 | Ex. 2 | Ex. 3 | Ex. 4 | Ex. 5 | Ex. 6 |
|---|---|---|---|---|---|---|---|---|
| Polyamide resin (A) | (A-1) Nylon 610 | Parts by mass | 100 | 100 | 100 | 100 | 100 | 100 |
| | (A-2) Nylon 6 | Parts by mass | 0 | 0 | 0 | 0 | 0 | 0 |
| | (A-3) Nylon 66 | Parts by mass | 0 | 0 | 0 | 0 | 0 | 0 |
| Thermoplastic resin (B) having reactive functional group | (B-1) Tafmer MH7020 | Parts by mass | 25 | 25 | 25 | 25 | 25 | 8 |
| | (B-2) POLYBOND 1002 | Parts by mass | 0 | 0 | 0 | 0 | 0 | 0 |
| | (B-3) BONDFAST 7M | Parts by mass | 0 | 0 | 0 | 0 | 0 | 0 |
| | (B-4) Polyphenylene oxide resin | Parts by mass | 0 | 0 | 0 | 0 | 0 | 0 |
| Organic-modified siloxane compound (C) | (C-1) Tegomer 6441P (X1, X2: ester group, terminal OH) | Parts by mass | 0.2 | 0.6 | 1.0 | 1.5 | 3.5 | 1.0 |
| | (C-2) Tegomer 2311 (XI, X2: alkylene group, terminal OH) | Parts by mass | 0 | 0 | 0 | 0 | 0 | 0 |
| Sulfonamide-based compound (D) | (D-1) N-butylbenzenesulfonamide | Parts by mass | 0 | 0 | 0 | 0 | 0 | 0 |
| | (D-2) p-Toluenesulfonamide | Parts by mass | 0 | 0 | 0 | 0 | 0 | 0 |
| Other Additives (E) | (E-1) Tegomer anti-scratch L (only alkyl) | Parts by mass | 0 | 0 | 0 | 0 | 0 | 0 |
| | (E-2) BY27-202H | Parts by mass | 0 | 0 | 0 | 0 | 0 | 0 |
| | (E-3) Sodium behenate | Parts by mass | 0 | 0 | 0 | 0 | 0 | 0 |
| Mass ratio of (B)/(C) | | - | 125 | 42 | 25 | 17 | 7 | 8 |
| Welding characteristics before retention test | Welding tensile strength, 1 mt@0°C | MPa | 45 | 49 | 55 | 51 | 49 | 50 |
| | Welding tensile elongation, 1 mmt@0°C | % | 50 | 60 | 75 | 65 | 60 | 60 |
| | Bending fatigue resistance Number of times until breakage@0°C | Times | 3000 | 4000 | 5000 | 4500 | 4000 | 3500 |
| Welding characteristics after retention test | Welding tensile strength, 1 mt@0°C | MPa | 31 | 37 | 47 | 40 | 37 | 35 |
| | Welding tensile elongation, 1 mmt@0°C | % | 35 | 45 | 64 | 51 | 45 | 42 |
| | Bending fatigue resistance Number of times until breakage@0°C | Times | 2000 | 3000 | 4250 | 3500 | 3000 | 2450 |

**Table 2**

| | | | Ex. 7 | Ex. 8 | Ex. 9 | Ex. 10 | Ex. 11 | Ex. 12 |
|---|---|---|---|---|---|---|---|---|
| Polyamide resin (A) | (A-1) Nylon 610 | Parts by mass | 100 | 100 | 100 | 100 | 100 | 100 |
| | (A-2) Nylon 6 | Parts by mass | 0 | 0 | 0 | 0 | 0 | 0 |
| | (A-3) Nylon 66 | Parts by mass | 0 | 0 | 0 | 0 | 0 | 0 |
| Thermoplastic resin (B) having reactive functional group | (B-1) Tafmer MH7020 | Parts by mass | 35 | 50 | 80 | 0 | 0 | 0 |
| | (B-2) POLYBOND 1002 | Parts by mass | 0 | 0 | 0 | 25 | 0 | 0 |
| | (B-3) BONDFAST 7M | Parts by mass | 0 | 0 | 0 | 0 | 25 | 0 |
| | (B-4) Polyphenylene oxide resin | Parts by mass | 0 | 0 | 0 | 0 | 0 | 25 |
| Organic-modified siloxane compound (C) | (C-1) Tegomer 6441P (X1, X2: ester group, terminal OH) | Parts by mass | 1.0 | 1.0 | 1.0 | 1.0 | 1.0 | 1.0 |
| | (C-2) Tegomer 2311 (XI, X2: alkylene group, terminal OH) | Parts by mass | 0 | 0 | 0 | 0 | 0 | 0 |
| Sulfonamide-based compound (D) | (0-1) N-butylbenzenesulfonamide | Parts by mass | 0 | 0 | 0 | 0 | 0 | 0 |
| | (0-2) p-Toluenesulfonamide | Parts by mass | 0 | 0 | 0 | 0 | 0 | 0 |
| Other Additives (E) | (E-1) Tegomer anti-scratch L (only alkyl) | Parts by mass | 0 | 0 | 0 | 0 | 0 | 0 |
| | (E-2) BY27-202H | Parts by mass | 0 | 0 | 0 | 0 | 0 | 0 |
| | (E-3) Sodium behenate | Parts by mass | 0 | 0 | 0 | 0 | 0 | 0 |
| Mass ratio of (B)/(C) | | - | 35 | 50 | 80 | 25 | 25 | 25 |
| Welding characteristics before retention test | Welding tensile strength, 1 mt@0°C | MPa | 50 | 45 | 40 | 45 | 50 | 45 |
| | Welding tensile elongation, 1 mmt@0°C | % | 65 | 60 | 50 | 55 | 65 | 55 |
| | Bending fatigue resistance Number of times until breakage@0°C | Times | 4000 | 3500 | 3000 | 3500 | 4500 | 2800 |
| Welding characteristics after retention test | Welding tensile strength, 1 mt@0°C | MPa | 40 | 34 | 30 | 31 | 39 | 31 |
| | Welding tensile elongation, 1 mmt@0°C | % | 52 | 45 | 35 | 38 | 50 | 38 |
| | Bending fatigue resistance Number of times until breakage@0°C | Times | 3100 | 2555 | 2100 | 2400 | 3500 | 1950 |

**Table 3**

| | | | Ex. 13 | Ex. 14 | Ex. 15 | Ex. 16 | Ex. 17 | Ex. 18 | Ex. 19 |
|---|---|---|---|---|---|---|---|---|---|
| Polyamide resin (A) | (A-1) Nylon 610 | Parts by mass | 100 | 0 | 0 | 100 | 100 | 100 | 100 |
| | (A-2) Nylon 6 | Parts by mass | 0 | 100 | 0 | 0 | 0 | 0 | 0 |
| | (A-3) Nylon 66 | Parts by mass | 0 | 0 | 100 | 0 | 0 | 0 | 0 |
| Thermoplastic resin (B) having reactive functional group | (B-1) Tafmer MH7020 | Parts by mass | 25 | 25 | 25 | 25 | 25 | 25 | 25 |
| | (B-2) POLYBOND | Parts by mass | 0 | 0 | 0 | 0 | 0 | 0 | 0 |
| | (B-3) BONDFAST 7M | Parts by mass | 0 | 0 | 0 | 0 | 0 | 0 | 0 |
| | (B-4) Maleic anhydride modified polyphenylene oxide resin | Parts by mass | 0 | 0 | 0 | 0 | 0 | 0 | 0 |
| Organic-modified siloxane compound (C) | (C-1) Tegomer 6441P (X1, X2: ester group, terminal OH) | Parts by mass | 0 | 1.0 | 1.0 | 1.0 | 1.0 | 1.0 | 1.0 |
| | (C-2) Tegomer 2311 (XI, X2: alkylene group, terminal OH) | Parts by mass | 1.0 | 0 | 0 | 0 | 0 | 0 | 0 |
| Sulfonamide-based compound (D) | (0-1) N-butvlbenzenesulfonamide | Parts by mass | 0 | 0 | 0 | 6 | 12 | 18 | 0 |
| | (D-2) p-Toluenesulfonamide | Parts by mass | 0 | 0 | 0 | 0 | 0 | 0 | 12 |
| Other Additives (E) | (E-1) Tegomer anti-scratch L (only alkyl) | Parts by mass | 0 | 0 | 0 | 0 | 0 | 0 | 0 |
| | (E-2) BY27-202H | Parts by mass | 0 | 0 | 0 | 0 | 0 | 0 | 0 |
| | (E-3) Sodium behenate | Parts by mass | 0 | 0 | 0 | 0 | 0 | 0 | 0 |
| Mass ratio of (B)/(C) | | - | 25 | 25 | 25 | 25 | 25 | 25 | 25 |
| Welding characteristics before retention test | Welding tensile strength, 1 mt@0°C | MPa | 50 | 50 | 45 | 55 | 55 | 55 | 55 |
| | Welding tensile elongation, 1 mmt@0°C | % | 50 | 55 | 45 | 80 | 85 | 80 | 75 |
| | Bending fatigue resistance Number of times until breakage@0°C | Times | 3000 | 4000 | 3500 | 5500 | 6200 | 5800 | 5500 |
| Welding characteristics after retention test | Welding tensile strength, 1 mt@0°C | MPa | 39 | 39 | 31 | 47 | 47 | 47 | 47 |
| | Welding tensile elongation, 1 mmt@0°C | % | 39 | 43 | 31 | 75 | 80 | 75 | 70 |
| | Bending fatigue resistance Number of times until breakage@0°C | Times | 2200 | 3100 | 2400 | 5000 | 5900 | 5500 | 5000 |

**Table 4**

| | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|
| Polyamide resin (A) | (A-1) Nylon 610 | Parts by mass | 100 | 100 | 100 | 100 | 100 | 100 |
| | (A-2) Nylon 6 | Parts by mass | 0 | 0 | 0 | 0 | 0 | 0 |
| | (A-3) Nylon 66 | Parts by mass | 0 | 0 | 0 | 0 | 0 | 0 |
| Thermoplastic resin (B) having reactive functional group | (B-1) Tafmer MH7020 | Parts by mass | 0 | 25 | 0 | 25 | 150 | 25 |
| | (B-2) POLYBOND | Parts by mass | 0 | 0 | 0 | 0 | 0 | 0 |
| | (B-3) BONDFAST 7M | Parts by mass | 0 | 0 | 0 | 0 | 0 | 0 |
| | (B-4) Maleic anhydride modified polyphenylene oxide resin | Parts by mass | 0 | 0 | 0 | 0 | 0 | 0 |
| Organic-modified siloxane compound (C) | (C-1) Tegomer 6441P (X1, X2: ester group, terminal OH) | Parts by mass | 0 | 0 | 0 | 0 | 0 | 0 |
| | (C-2) Tegomer 2311 (X1, X2: alkylene group, terminal OH) | Parts by mass | 0 | 0 | 1 | 10 | 1 | 0 |
| Sulfonamide-based compound (D) | (D-1) N-butylbenzenesulfonamide | Parts by mass | 0 | 0 | 0 | 0 | 0 | 0 |
| | (D-2) p-Toluenesulfonamide | Parts by mass | 0 | 0 | 0 | 0 | 0 | 0 |
| Other Additives (E) | (E-1) Tegomer anti-scratch L (only alkyl) | Parts by mass | 0 | 0 | 0 | 0 | 0 | 1 |
| | (E-2) BY27-202H | Parts by mass | 0 | 0 | 0 | 0 | 0 | 0 |
| | (E-3) Sodium behenate | Parts by mass | 0 | 0 | 0 | 0 | 0 | 0 |
| Mass ratio of (B)/(C) | | - | - | - | - | 2.5 | 150 | - |
| Welding characteristics before retention test | Welding tensile strength, 1 mt@0°C | MPa | 65 | 40 | 65 | 40 | 20 | 40 |
| | Welding tensile elongation, 1 mmt@0°C | % | 40 | 35 | 30 | 25 | 20 | 35 |
| | Bending fatigue resistance Number of times until breakage@0°C | Times | 1400 | 2200 | 900 | 1400 | 1600 | 2200 |
| Welding characteristics after retention test | Welding tensile strength, 1 mt@0°C | MPa | 39 | 20 | 33 | 20 | 12 | 20 |
| | Welding tensile elongation, 1 mmt@0°C | % | 27 | 21 | 18 | 15 | 10 | 21 |
| | Bending fatigue resistance Number of times until breakage@0°C | Times | 560 | 880 | 360 | 560 | 500 | 880 |

| | | | Comp. Ex. 7 | Comp. Ex. 8 | Comp. Ex. 9 | Comp. Ex. 10 | Comp. Ex. 11 | |
|---|---|---|---|---|---|---|---|---|
| Polyamide resin (A) | (A-1) Nylon 610 | Parts by mass | 100 | 100 | 100 | 100 | 0 | |
| | (A-2) Nylon 6 | Parts by mass | 0 | 0 | 0 | 0 | 100 | |
| | (A-3) Nylon 66 | Parts by mass | 0 | 0 | 0 | 0 | 0 | |
| Thermoplastic resin (B) having reactive functional group | (B-1) Tafmer MH7020 | Parts by mass | 25 | 25 | 0 | 25 | 0 | |
| | (B-2) POLYBOND | Parts by mass | 0 | 0 | 0 | 0 | 0 | |
| | (B-3) BONDFAST 7M | Parts by mass | 0 | 0 | 0 | 0 | 25 | |
| | (B-4) Maleic anhydride modified polyphenylene oxide resin | Parts by mass | 0 | 0 | 0 | 0 | 0 | |
| Organic-modified siloxane compound (C) | (C-1) Tegomer 6441P (X1, X2: ester group, terminal OH) | Parts by mass | 0 | 0 | 0 | 0 | 0 | |
| | (C-2) Tegomer 2311 (X1, X2: alkylene group, terminal OH) | Parts by mass | 0 | 0 | 0 | 0 | 0 | |
| Sulfonamide-based compound (D) | (D-1) N-butylbenzenesulfonamide | Parts by mass | 0 | 0 | 0 | 12 | 0 | |
| | (D-2) p-Toluenesulfonamide | Parts by mass | 0 | 0 | 12 | 0 | 0 | |
| Other Additives (E) | (E-1) Tegomer anti-scratch L (only alkyl) | Parts by mass | 0 | 0 | 0 | 0 | 0 | |
| | (E-2) BY27-202H | Parts by mass | 1 | 0 | 0 | 0 | 0 | |
| | (E-3) Sodium behenate | Parts by mass | 0 | 1 | 0 | 0 | 0 | |
| Mass ratio of (B)/(C) | | - | - | - | - | - | - | |
| Welding characteristics before retention test | Welding tensile strength, 1 mt@0°C | MPa | 40 | 40 | 35 | 25 | 40 | |
| | Welding tensile elongation, 1 mmt@0°C | % | 25 | 30 | 30 | 35 | 35 | |
| | Bending fatigue resistance Number of times until breakage@0°C | Times | 1900 | 2200 | 1600 | 2600 | 2400 | |
| Welding characteristics after retention test | Welding tensile strength, 1 mt@0°C | MPa | 20 | 20 | 15 | 15 | 22 | |
| | Welding tensile elongation, 1 mmt@0°C | % | 15 | 18 | 10 | 15 | 20 | |
| | Bending fatigue resistance Number of times until breakage@0°C | Times | 760 | 880 | 350 | 800 | 1600 | |

In Examples 1 to 19, as compared with Comparative Examples 1 to 11, since the organic-modified siloxane compound (C) can react with both the polyamide resin (A) and the thermoplastic resin (B) having the reactive functional group by containing the thermoplastic resin (B) having the reactive functional group and the organic-modified siloxane compound (C) in specific amounts, the compatibility between the polyamide resin (A) and the thermoplastic resin (B) having the reactive functional group was improved, and as a result, a molded article excellent in tensile strength, toughness, and bending fatigue resistance of the weld part can be obtained. Further, it is possible to obtain a molded article which is excellent in dispersion stability and in which a decrease in tensile strength, toughness, and bending fatigue resistance of the weld part is prevented even after the melt retention in the molding machine.

From comparison between Example 3 and Examples 1, 2, 4, and 5, by setting the content of the organic-modified siloxane compound (C) having the specific structure within a preferable range, the compatibility between the polyamide resin (A) and the thermoplastic resin (B) having the reactive functional group is further improved, and as a result, a molded article having more excellent tensile strength, toughness, and bending fatigue resistance of the weld part can be obtained. Further, it is possible to obtain the molded article in which the decrease in tensile strength, toughness, and bending fatigue resistance of the weld part is prevented even after the retention in the molding machine.

From comparison between Example 3 and Examples 6 to 9, by setting the content of the thermoplastic resin (B) having the reactive functional group in the preferable range, reactivity between the organic-modified siloxane compound (C) and the thermoplastic resin (B) having the reactive functional group is further improved, and as a result, the compatibility of the thermoplastic resin (B) having the reactive functional group with the polyamide resin (A) is further improved. As a result, it is possible to obtain the molded article excellent in tensile strength, toughness, and bending fatigue resistance of the weld part. Further, it is possible to obtain the molded article in which the decrease in tensile strength, toughness, and bending fatigue resistance of the weld part is prevented even after the retention in the molding machine.

From comparison between Example 3 and Examples 10 and 11, by using a preferable reactive functional group as the reactive functional group in the thermoplastic resin (B) having the reactive functional group, reactivity with both the polyamide resin (A) and the organic-modified siloxane compound (C) is improved, and as a result, the compatibility between the polyamide resin (A) and the thermoplastic resin (B) having the reactive functional group is further improved. As a result, it is possible to obtain the molded article excellent in tensile strength, toughness, and bending fatigue resistance of the weld part. Further, it is possible to obtain the molded article in which the decrease in tensile strength, toughness, and bending fatigue resistance of the weld part is prevented even after the retention in the molding machine.

From comparison between Example 3 and Example 12, the compatibility between the polyamide resin (A) and the thermoplastic resin (B) having the reactive functional group is further improved by using a preferable base polymer as the base polymer of the thermoplastic resin in the thermoplastic resin (B) having the reactive functional group. As a result, it is possible to obtain the molded article excellent in tensile strength, toughness, and bending fatigue resistance of the weld part. Further, it is possible to obtain the molded article in which the decrease in tensile strength, toughness, and bending fatigue resistance of the weld part is prevented even after the retention in the molding machine.

From comparison between Example 3 and Example 13, by using the organic-modified siloxane compound (C) having a preferred structure, the reactivity to both the polyamide resin (A) and the thermoplastic resin (B) having the reactive functional group is further improved, and the compatibility between the polyamide resin (A) and the thermoplastic resin (B) having the reactive functional group is further improved. As a result, it is possible to obtain the molded article excellent in tensile strength, toughness, and bending fatigue resistance of the weld part. Further, it is possible to obtain the molded article in which the decrease in tensile strength, toughness, and bending fatigue resistance of the weld part is prevented even after the retention in the molding machine.

From comparison between Example 3 and Examples 14 and 15, by using the polyamide resin (A) in which the crystallization speed (Tm - Tc) is in the preferable range, the molded article having more excellent tensile strength, toughness and bending fatigue resistance at the weld part can be obtained. Further, it is possible to obtain the molded article in which the decrease in tensile strength, toughness, and bending fatigue resistance of the weld part is prevented even after the retention in the molding machine.

From comparison between Example 3 and Examples 16 to 18, by further setting the content of the sulfonamide-based compound (D) having the specific structure within the preferable range, the interfacial flexibility between the polyamide resin (A) and the thermoplastic resin (B) having the reactive functional group is further improved, and the molded article having more excellent bending fatigue resistance at the weld part can be obtained. Further, it is possible to obtain the molded article in which the decrease in tensile strength, toughness, and bending fatigue resistance of the weld part is further prevented even after the retention in the molding machine.

From comparison between Example 17 and Example 19, by setting the content of the sulfonamide-based compound (D) having the more preferable structure within the preferable range, the interfacial flexibility between the polyamide resin (A) and the thermoplastic resin (B) having the reactive functional group is further improved, and the molded article having more excellent bending fatigue resistance at the weld part can be obtained. Further, it is possible to obtain the molded article in which the decrease in tensile strength, toughness, and bending fatigue resistance of the weld part is further prevented even after the retention in the molding machine.

Although the present invention has been described in detail with reference to specific embodiments, it is apparent to those skilled in the art that various changes and modifications can be made without departing from the spirit and the scope of the present invention. The present application is based on the Japanese patent application (Japanese Patent Application No. 2021-042120) filed on March 16, 2021, and the contents thereof are incorporated herein by reference.

## Claims

1. A polyamide resin composition comprising:
a polyamide resin (A); and
0.1 to 100 parts by mass of a thermoplastic resin (B) having a reactive functional group and 0.1 to 5 parts by mass of an organic-modified siloxane compound (C) having a structure represented by the following formula (1), with respect to 100 parts by mass of the polyamide resin (A), 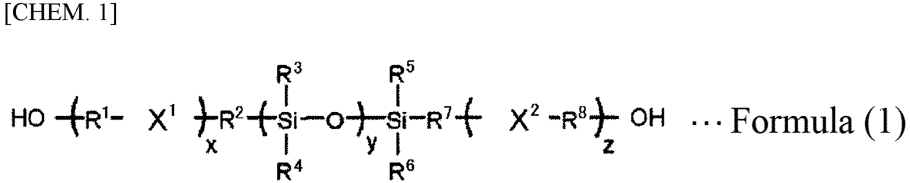
where in the formula (1), R¹, R², R⁷, and R⁸ are the same or different from one another and each is a divalent hydrocarbon group; R³, R⁴, R⁵, and R⁶ are the same or different from one another and each is a hydrogen atom, a monovalent hydrocarbon group or a derivative group thereof, an alkoxy group, an aryloxy group, or -NR⁹R¹⁰ (R⁹ and R¹⁰ are the same or different from one another and each is a hydrogen atom, or a monovalent hydrocarbon group or a derivative group thereof); x, y, and z are integers of 1 or more; and X¹ and X² are the same or different from each other, and each is an ester group or a divalent hydrocarbon group.

2. The polyamide resin composition according to claim 1, wherein X¹ and X² in the formula (1) of the organic-modified siloxane compound (C) are the same or different from each other and each is an ester group or an alkylene group.

3. The polyamide resin composition according to claim 1 or 2, wherein the reactive functional group of the thermoplastic resin (B) is at least one selected from an acid anhydride group and an epoxy group.

4. The polyamide resin composition according to any one of claims 1 to 3, further comprising 1 to 20 parts by mass of a sulfonamide-based compound (D) with respect to 100 parts by mass of the polyamide resin (A), the sulfonamide-based compound (D) having a structure represented by the following formula (2), 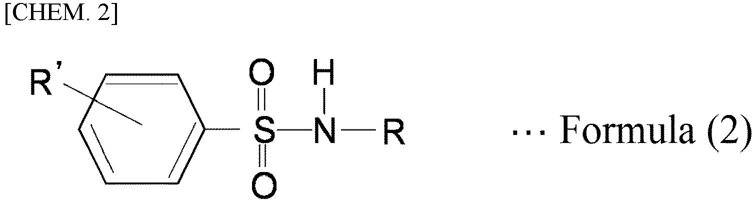 where in the formula (2), R and R' are the same or different from each other, and each is an alkyl group having 1 to 5 carbon atoms or a hydroxyalkyl group.

5. A molded article obtained by molding the polyamide resin composition according to any one of claims 1 to 4.

6. The molded article according to claim 5, comprising a weld part.
